# EUROPEAN PATENT APPLICATION

(11) **EP 4 850 881 A1**
(43) Date of publication of application: **09.12.2026**
(21) Application number: 25767432.5
(22) Date of filing: 06.03.2025
(51) Int. Cl.: B28D 1/08, B23D 61/18

(54) **ELECTROPLATED POLYGONAL BEADED WIRE SAW**

(30) Priority: 07.03.2024 CN 202410261167; 17.04.2024 CN 202410463238; 17.04.2024 CN 202410463253
(71) Applicant: GUILIN GRIND-ACADEMY MATERIAL TECHNOLOGY CO., LTD., Guangxi 541004 (CN); Guilin Champion Union Diamond Co., Ltd., Guilin, Guangxi 541004 (CN)
(72) Inventor: SONG, Jingxin, Guilin, Guangxi 541004 (CN); LIANG, Anning, Guilin, Guangxi 541004 (CN); SONG, Youpeng, Guilin, Guangxi 541004 (CN)
(74) Representative: Metida
(86) International application number: PCT/CN2025/080985
(87) International publication number: WO 2025/185692

(57) **Abstract**

The present invention relates to the field of wire saw cutting, and in particular, to an electroplated polygonal beaded wire saw. The electroplated polygonal beaded wire saw includes a plurality of beads, a plurality of spacers and a steel wire rope, wherein the plurality of beads and the plurality of spacers are alternately and coaxially sleeved on the steel wire rope; each bead is formed by axially stacking at least one primary working substrate; the primary working substrate is of a frustum-shaped structure having an axial orthographic projection contour line similar to a polygon, and the axial orthographic projection contour line of the primary working substrate is a closed structure formed by alternating a plurality of convex sections and a plurality of concave sections; a primary working substrate plated layer and a plurality of primary working substrate non-plated layers are arranged on the peripheral surface of the primary working substrate; and diamond abrasive grains are arranged on the primary working substrate plated layer, and the primary working substrate non-plated layers are arranged at the larger-diameter end of the frustum-shaped primary working substrate. The present invention facilitates the bidirectional ordered arrangement of functional serrations, namely, macroscopic serrations in the axial direction and microscopic serrations in the circumferential direction, thereby enabling the implementation of a shape-retaining structure and optimizing chip removal and cooling effects during bead operation.

## Description

### TECHNICAL FIELD

The present invention relates to the field of wire saw cutting, and in particular to an electroplated polygonal beaded wire saw.

### BACKGROUND

In the prior art, a bead of a wire saw is mainly made by processes such as powder metallurgy, brazing and electroplating. A peripheral surface of a working layer (containing diamond abrasive grains) of the bead has a cylindrical shape, a frustoconical shape, a combination of multiple cylindrical segments, or a combination of multiple frustoconical segments, with a circular cross-section at any axial point. For the bead with the circular cross-section, the front end functions in a similar to a plunger, pushing away cooling water and atomizing it, which negatively affects the cooling and chip removal effects of the cooling water on a grinding surface of the bead. The bead with the circular cross-section is also prone to transverse cutting, resulting in an uneven cut surface of a workpiece. As a result, the parallelism of the machined workpiece exceeds tolerance limits. Since the formulation of the working layer containing the diamond abrasive grain is subject to significant constraints, the service life of the bead and the implementation of a high-speed sawing process of the wire saw are limited to a great extent.

To mitigate the aforementioned drawbacks, in the prior art, the bead is made by a surface-set brazing process, and the diamond abrasive grain layer may also be arranged in an orderly manner. In this way, the performance may be improved to a certain extent, but the manufacturing process is relatively complex and the manufacturing cost is relatively high. When the bead is made using a surface-set electroplating process, the front end is susceptible to impact, causing excessively rapid diameter wear and results in a tapered front end, which affects the overall service life of the bead. When the bead is made using an impregnated powder metallurgy process, the front end is made of a wear-resistant formulation to alleviate the above problems, but the manufacturing process is cumbersome and the manufacturing cost is increased. The bead of a polygonal beaded wire saw, made by the powder metallurgy process or the brazing process, alleviates some of the above problems, but a shape-retaining structure of the polygonal bead is relatively complex in machining process and high in manufacturing cost.

### SUMMARY

The technical problem to be solved by the present invention is to provide an electroplated polygonal beaded wire saw to solve the above problems.

A technical solution of the present invention to solve the above technical problems is described as below. An electroplated polygonal beaded wire saw includes a plurality of beads, a plurality of spacers and a steel wire rope, wherein the plurality of beads and the plurality of spacers are alternately and coaxially sleeved on the steel wire rope; and each bead is formed by axially stacking at least one primary working substrate, the primary working substrate is of a frustum-shaped structure having an axial orthographic projection contour line similar to a polygon, the axial orthographic projection contour line of the primary working substrate is a closed structure formed by alternating a plurality of convex sections and a plurality of concave sections, a primary working substrate plated layer and a plurality of primary working substrate non-plated layers are arranged on a peripheral surface of the primary working substrate, diamond abrasive grains are arranged on the primary working substrate plated layer, and the primary working substrate non-plated layers are arranged at a large-diameter end of the frustum-shaped primary working substrate.

The present invention has the following beneficial effects. The plurality of primary working substrate non-plated layers are arranged on the peripheral surface of the frustum-shaped primary working substrate, so that during bead operation, only part of the diamond abrasive grains close to a large-diameter part (i.e., close to a frustum-shaped bottom surface of the substrate) at various points (i.e., at any central angle) in the circumferential direction of the substrate participate in grinding, and in the circumferential direction, the diamond abrasive grains corresponding to the plurality of convex sections of the contour line have relatively greater probability of contacting (i.e., grinding) the workpiece than those corresponding to the plurality of concave sections of the contour line. Therefore, the contact area between the bead and the workpiece is greatly reduced. Compared with the prior art, under the same applied force, the working pressure of the diamond abrasive grains is higher, which in turn enhances the cutting capability and improves the sharpness. On this basis, by adaptively adjusting the concentration of the diamond abrasive grains on the primary working substrate plated layer corresponding to the convex sections and the concave sections on the contour line, it is conducive to achieving a shape-retaining function of the polygonal bead.

On the basis of the above technical solution, the present invention may also be improved as follows.

Further, azimuth angles of the primary working substrate non-plated layers on the plurality of beads are randomly staggered at various points in an axial direction; and the primary working substrate plated layer is provided with a plurality of primary working substrate working sections and a plurality of primary working substrate non-working sections, which are alternately arranged in a circumferential direction of a frustum lateral surface, the primary working substrate working sections and the primary working substrate non-working sections are both of strip-shaped structures, the diamond abrasive grains are radially arranged on the primary working substrate working sections in a single layer, and the circumferential lengths of the primary working substrate working section corresponding to the convex sections that constitute the axial orthographic projection contour line of the primary working substrate are greater than the circumferential lengths of the primary working substrate working sections corresponding to the concave sections.

The above further solution has the following beneficial effects. The structural arrangement of the primary working substrate working sections and the primary working substrate non-working sections enables the diamond abrasive grains on the primary working substrate working sections to squeeze the workpiece corresponding to the adjacent primary working substrate non-working sections, so that mechanical crushing is achieved on a macro scale, thereby reducing the overall cutting load on the beads; the diamond abrasive grains that participate in the work on the periphery of the primary working substrate form a "micro-serrated" structure in the circumferential direction of the frustum lateral surface to achieve micro-mechanical crushing of the workpiece, which is conducive to reducing the machining load, facilitates cooling and chip removal, reducing diamond cutting heat, and prolonging the service life of the beads. The primary working substrate non-working sections at the large-diameter end are prone to wear, forming grooves that create random gaps with the workpiece, these gaps provide a better chip receiving/removal space and also function as water channels to achieve a short-distance and smooth chip removal, thereby greatly reducing frictional heat and thus reducing heat loss of the diamond abrasive grains. In addition, the proportion of cooling water being ineffectively displaced and atomized is greatly reduced, so that the cooling water cools down the working diamond abrasive grains faster and achieves a higher effective cooling rate, which is conducive to prolonging the service life of the bead. By adaptively adjusting the circumferential lengths of the primary working substrate working sections and the primary working substrate non-working sections, the number of the diamond abrasive grains participating in work may be controlled, which is conducive to reducing the machining load and reducing the breakage rate of the wire saw. The primary working substrate forms an axial "macro-serrated" structure in a multi-frustum manner, which provides a large chip and water receiving space, achieves an intermittent chip cutting mode, and is conducive to improving the sharpness. A single plated layer of the diamond abrasive grains is short in manufacturing cycle, simple in process and low in cost.

Further, the lengths of the primary working substrate working sections in the circumferential direction of the frustum lateral surface are greater than or equal to 1 time a particle size of the diamond abrasive grains, and less than 2 times the particle size of the diamond abrasive grains, and the lengths of the primary working substrate non-working sections in the circumferential direction of the frustum lateral surface are greater than or equal to 0.2 time the particle size of the diamond abrasive grains, and less than 2 times the particle size of the diamond abrasive grains.

The above further solution has the following beneficial effects: by setting different circumferential lengths for the primary working substrate working sections, different supporting and protecting functions are formed among the diamond abrasive grains, which manifest as difference in wear resistance, thereby achieving uniform wear and in turn achieving the shape-retaining function.

Further, when each bead is formed by axially stacking the plurality of primary working substrates, the primary working substrate non-plated layers on the plurality of primary working substrates are arranged at the same azimuth angle.

The above further solution has the following beneficial effects: the primary working substrate non-plated layers on the plurality of primary working substrates of a single bead are at the same azimuth angle, which is conducive to increasing the mechanical crushing proportion of the workpiece and reducing the wear rate of the diamond abrasive grains by the workpiece.

Further, the plurality of primary working substrate non-plated layers are in one-to-one correspondence with the plurality of concave sections on the contour line, the concentration of the diamond abrasive grains arranged on the primary working substrate plated layer corresponding to the convex sections is higher than the concentration of the diamond abrasive grains arranged on the primary working substrate plated layer corresponding to the concave sections, the concentration of the diamond abrasive grains arranged on the primary working substrate plated layer corresponding to the convex sections is 1.2 to 2 times the concentration of the diamond abrasive grains arranged on the primary working substrate plated layer corresponding to the concave sections, and in the circumferential direction of the primary working substrate plated layer, the concentration of the diamond abrasive grains gradually decreases or decreases in a stepwise manner from a most convex point on the primary working substrate plated layer corresponding to the convex sections to a most concave point on the primary working substrate plated layer corresponding to the concave sections adjacent to the convex sections.

The above further solution has the following beneficial effects. By providing the concentration difference of the diamond abrasive grains on the convex sections and the concave sections, it is conducive to adjusting the wear resistance of all areas, so that the convex sections with a higher concentration of the diamond abrasive grains have higher wear resistance, and the concave sections with a lower concentration of the diamond abrasive grains have lower wear resistance. The probability of contact between the convex sections and the workpiece is much higher than the probability of contact between the concave sections and the workpiece, so that the shape-retaining function of the beads of the wire saw can be achieved.

Further, the closed structure formed by alternately arranging the plurality of convex sections and the plurality of concave sections that constitute the axial orthographic projection contour line of the primary working substrate is a polygonal structure formed by sequentially connecting straight lines, a structure formed by alternately connecting straight lines and arcs, or a structure formed by sequentially connecting arcs.

The above further solution has the beneficial effect that various embodiments are conducive to improving the applicability of the present invention.

Further, the radial thickness of the primary working substrate plated layer is greater than or equal to 1 time a particle size of the diamond abrasive grains, and less than 1.5 times the particle size of the diamond abrasive grains.

The above further solution has the following beneficial effects: it is advantageous to arrange the diamond abrasive grains in a single layer on the primary working substrate plated layers in the radial direction, and the primary working substrate plated layers provide a higher holding force onto the diamond abrasive grains, which is conducive to prolonging the service life of the bead.

Further, in an axial direction of a peripheral inclined surface of the primary working substrate, for any two points spaced apart by a distance equal to a particle size of the diamond abrasive grains, the difference between the respective distances from said two points to the central axis of the primary working substrate ranges from 10% to 40% of the particle size of the diamond abrasive grains.

The above further solution has the following beneficial effect: it is conducive to adjusting the high sharpness and wear resistance of the wire saw by providing different numbers of diamond abrasive grains participating in work (also the concept of different concentrations).

Further, each bead further includes at least one service life-prolonging substrate, the primary working substrate and the service life-prolonging substrate are axially stacked, the service life-prolonging substrate is of a frustum-shaped structure having an axial orthographic projection contour line similar to a polygon, the axial orthographic projection contour line of the service life-prolonging substrate is a closed structure formed by alternating a plurality of convex sections and a plurality of concave sections, a plurality of service life-prolonging substrate plated layers, a plurality of first service life-prolonging substrate non-plated layers and a plurality of second service life-prolonging substrate non-plated layers are arranged on a peripheral surface of the service life-prolonging substrate, diamond abrasive grains are arranged on the service life-prolonging substrate plated layers, and the first service life-prolonging substrate non-plated layers are arranged at a large-diameter end of the frustum-shaped service life-prolonging substrate; and in one of the beads, the large-diameter end and a small-diameter end of the primary working substrate have the same orientation as the large-diameter end and a small-diameter end of the service life-prolonging substrate, and the convex sections and the concave sections that constitute the axial orthographic projection contour line of the primary working substrate are at the same azimuth angle as the convex sections and the concave sections that constitute the axial orthographic projection contour line of the service life-prolonging substrate.

The above further solution has the following beneficial effects. The primary working substrate wears during operation, such that the number of the diamond particles participating in the grinding work on a grinding working surface of the primary working substrate is continuously reduced as the diameter is progressively reduced; by providing the service life-prolonging substrate, in the case where the feeding speed of the wire saw and a tensioning force of the steel wire rope are fixed, the remaining margin of the tensioning force is fully utilized; and the diamond abrasive grains arranged on the service life-prolonging substrate plated layers increase the number of the diamond abrasive grains in contact with the workpiece, thereby prolonging the service life of the wire saw, improving the cutting sharpness of the wire saw, increasing the proportion of mechanical crushing, and reducing the machining load.

Further, the life-increasing substrate plated layers are of serrated structures, and the plurality of serrated structures have tooth roots arranged around the small-diameter end of the service life-prolonging substrate and tooth tips arranged at circumferential midpoints of the convex sections or of the concave sections at the large-diameter end of the service life-prolonging substrate.

The above further solution has the following beneficial effects. The structures of the service life-prolonging substrate plated layers are conducive to a gradual increase of the number of the diamond abrasive grains from the large-diameter end to the small-diameter end, which inversely corresponds to a gradual decrease of the number of the diamond abrasive grains from the large-diameter end to the small-diameter end on the primary working substrate plated layers. This is advantageous in that for the bead, as the diameter of the primary working substrate gradually decreases and the number of the diamond abrasive grains participating in work declines, a decrease in the diameter of the service life-prolonging substrate and a corresponding increase in the number of the diamond abrasive grains participating in work provide appropriate compensation. Consequently, the machining load is in a state where the safe tensioning force of the steel wire rope is fully utilized, which in turn can control the feeding speed to be in a relatively balanced state.

Further, each service life-prolonging substrate plated layer is provided with a plurality of service life-prolonging substrate working sections and a plurality of service life-prolonging substrate non-working sections, which are alternately arranged in a circumferential direction of a frustum lateral surface, the service life-prolonging substrate working sections and the service life-prolonging substrate non-working sections are both of strip-shaped structures, diamond abrasive grains are radially arranged on the service life-prolonging substrate working sections in a single layer, and the circumferential lengths of the service life-prolonging substrate working sections corresponding to the convex sections that constitute the axial orthographic projection contour line of the service life-prolonging substrate are greater than the circumferential lengths of the service life-prolonging substrate working sections corresponding to the concave sections.

The above further solution has the following beneficial effect: the primary working substrate may be assisted in achieving the shape-retaining function of the polygonal bead.

Further, the circumferential lengths of the service life-prolonging substrate working sections are the same as the circumferential lengths of the primary working substrate working sections, the circumferential lengths of the service life-prolonging substrate non-working sections are the same as the circumferential lengths of the primary working substrate non-working sections, and orientations of the service life-prolonging substrate working sections and the service life-prolonging substrate non-working sections on the service life-prolonging substrate plated layers are the same as orientations of the primary working substrate working sections and the primary working substrate non-working sections on the primary working substrate plated layers.

The above further solution has the following beneficial effect: the primary working substrate may be assisted in achieving the shape-retaining function of the polygonal bead.

Further, the circumferential lengths of the service life-prolonging substrate working sections are greater than or equal to 1 time the particle size of the diamond abrasive grains and less than 2 times the particle size of the diamond abrasive grains, and the circumferential lengths of the service life-prolonging substrate non-working sections are greater than or equal to 0.2 time the particle size of the diamond abrasive grains and less than 2 times the particle size of the diamond abrasive grains.

The above further solution has the following beneficial effects: by setting the circumferential lengths of the working sections to be different, different supporting and protecting functions are formed among the diamond abrasive grains, which manifest as difference in wear resistance, thereby achieving uniform wear and in turn achieving the shape-retaining function.

Further, when one of the beads is provided with the plurality of primary working substrates and the plurality of service life-prolonging substrates, the first service life-prolonging substrate non-plated layers on the plurality of service life-prolonging substrates are arranged at the same azimuth angle.

The above further solution has the following beneficial effect: it is conducive to increasing the mechanical crushing proportion of the workpiece and reducing the wear rate of the diamond abrasive grains by the workpiece.

Further, azimuth angles of the first service life-prolonging substrate non-plated layers on the plurality of beads are randomly staggered at various points in an axial direction.

The above further solution has the following beneficial effect: it is conducive to increasing the mechanical crushing proportion of the workpiece and reducing the wear rate of the diamond abrasive grains by the workpiece.

Further, the closed structure formed by alternately arranging the plurality of convex sections and the plurality of concave sections that constitute the service life-prolonging substrate is a polygonal structure formed by sequentially connecting straight lines, a structure formed by alternately connecting straight lines and arcs, or a structure formed by sequentially connecting arcs.

The above further solution has the beneficial effect that various embodiments are conducive to improving the applicability of the present invention.

Further, the radial thickness of each service life-prolonging substrate plated layer is greater than or equal to 1 time the particle size of the diamond abrasive grains, and less than 1.5 times the particle size of the diamond abrasive grains.

The above further solution has the following beneficial effects: the diamond abrasive grains are arranged on the primary working substrate plated layers in a single layer in the radial direction, and the primary working substrate plated layers provide a higher holding force onto the diamond abrasive grains, which is conducive to prolonging the service life of the beads.

### BRIEF DESCRIPTION OF DRAWINGS

FIG. 1 is a schematic diagram of an overall structure according to Embodiment 1 of the present invention;
FIG. 2 is a schematic structural diagram of a bead according to Embodiment 1 of the present invention;
FIG. 3 is a side view of the bead according to Embodiment 1 of the present invention;
FIG. 4 is a front view of the bead according to Embodiment 1 of the present invention;
FIG. 5 is a sectional view of the bead according to Embodiment 1 of the present invention;
FIG. 6 is an enlarged schematic diagram of an area A in the structure shown in FIG. 5;
FIG. 7 is a schematic diagram of a machining state according to an embodiment of the present invention;
FIG. 8 is a schematic diagram of a primary working substrate working section and a primary working substrate non-working section on a primary working substrate plated layer according to an embodiment of the present invention;
FIG. 9 is a schematic diagram of an overall structure according to Embodiment 2 of the present invention;
FIG. 10 is a schematic structural diagram of a bead according to Embodiment 2 of the present invention;
FIG. 11 is a side view of the bead according to Embodiment 2 of the present invention;
FIG. 12 is a schematic structural diagram of a bead according to Embodiment 3 of the present invention;
FIG. 13 is a side view of the bead according to Embodiment 3 of the present invention;
FIG. 14 is a schematic diagram of an overall structure according to Embodiment 4 of the present invention;
FIG. 15 is an enlarged schematic diagram of an area Q in the structure shown in FIG. 14;
FIG. 16 is a right view of the structure shown in FIG. 14;
FIG. 17 is a sectional view of a service life-prolonging substrate according to an embodiment of the present invention;
FIG. 18 is a schematic diagram of an overall structure according to Embodiment 5 of the present invention; and
FIG. 19 is an enlarged schematic diagram of an area T in the structure shown in FIG. 18.

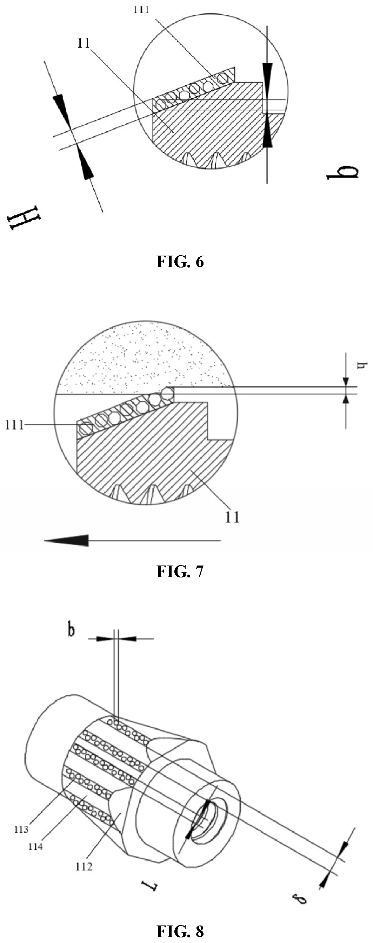

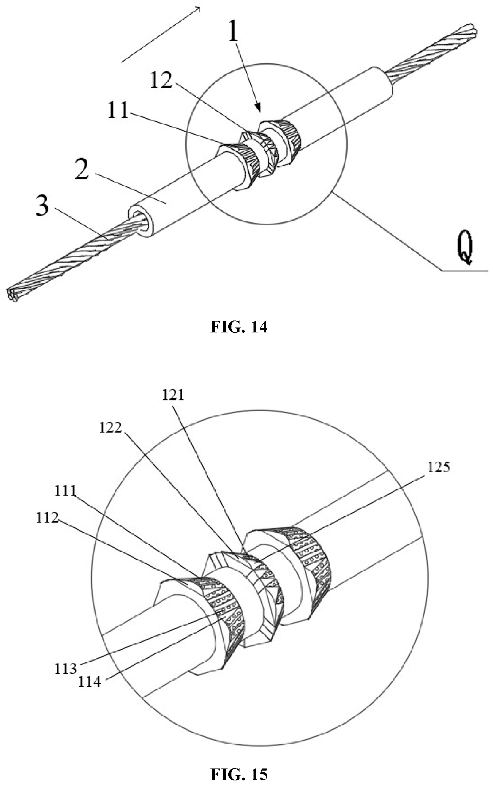

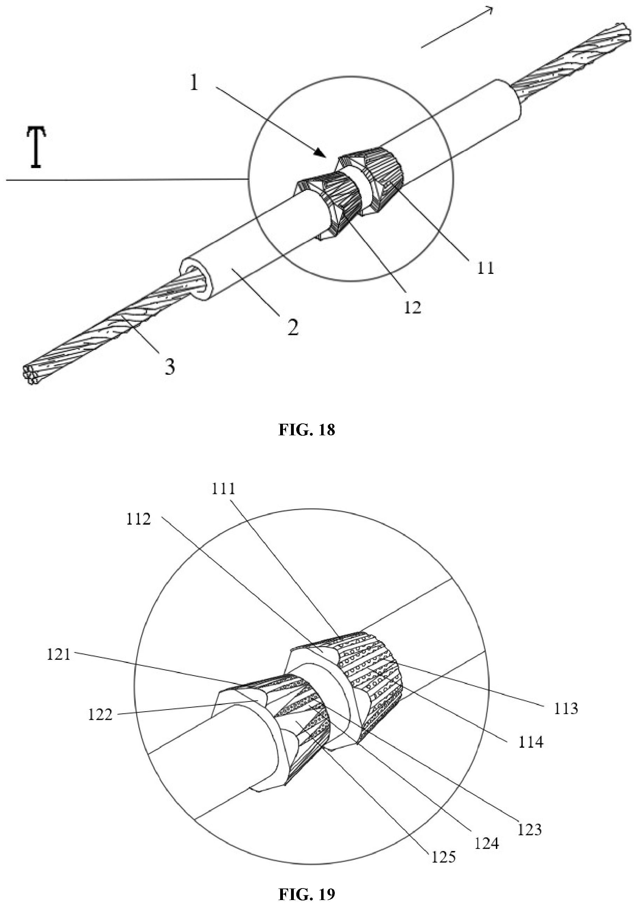

In FIG. 6, H denotes a radial thickness of a primary working substrate plated layer, and b denotes a particle size of diamond abrasive grains; in FIG. 7, h denotes the machining allowance of a workpiece, and the arrow denotes a machining direction of a wire saw; in FIG. 8, b denotes the particle size of the diamond abrasive grains, L denotes a length of a primary working substrate working section in a circumferential direction of a frustum lateral surface, and δ denotes a length of a primary working substrate non-working section in the circumferential direction of the frustum lateral surface; and in FIGs. 14 and 18, the arrows denote the machining direction of the wire saw.

In the drawings, components represented by various reference numerals are listed as follows:
1. Bead; 2. Spacer; 3. Steel wire rope; 11. Primary working substrate; 12. Service life-prolonging substrate; 111. Primary working substrate plated layer; 112. Primary working substrate non-plated layer; 113. Primary working substrate working section; 114. Primary working substrate non-working section; 121. Service life-prolonging substrate plated layer; 122. First service life-prolonging substrate non-plated layer; 123. Service life-prolonging substrate working section; 124. Service life-prolonging substrate non-working section; and 125. Second service life-prolonging substrate non-plated layer.

### DETAILED DESCRIPTION

The principles and features of the present invention will be described below. The listed examples are intended only to explain the present invention but not to limit the scope of the present invention.

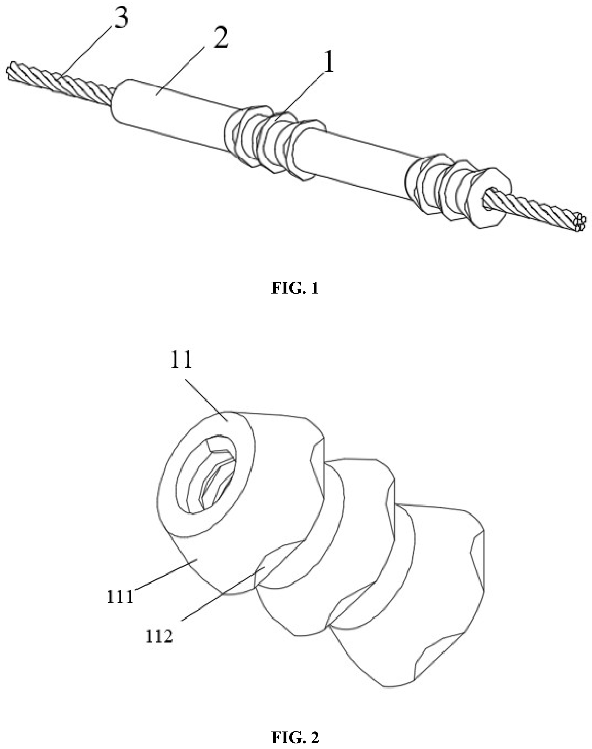

As shown in FIGs. 1 to 13, an electroplated polygonal beaded wire saw includes: a plurality of beads 1, a plurality of spacers 2 and a steel wire rope 3. The plurality of beads 1 and the plurality of spacers 2 are alternately and coaxially sleeved on the steel wire rope 3. Each bead 1 is formed by axially stacking at least one primary working substrate 11. The primary working substrate 11 is of a frustum-shaped structure having an axial orthographic projection contour line similar to a polygon. The axial orthographic projection contour line of the primary working substrate 11 is a closed structure formed by alternating a plurality of convex sections and a plurality of concave sections. A primary working substrate plated layer 111 and a plurality of primary working substrate non-plated layers 112 are arranged on a peripheral surface of the primary working substrate 11. Diamond abrasive grains are arranged on the primary working substrate plated layer 111. The primary working substrate non-plated layers 112 are arranged at a large-diameter end of the frustum-shaped primary working substrate 11.

It should be noted that in the technical solution of the present invention, the expression that "the plurality of beads 1 and the plurality of spacers 2 are arranged alternately" means that in the direction of the steel wire rope 3, one spacer 2 is arranged between every two beads 1, and one bead 1 is arranged between every two spacers 2.

Each primary working substrate non-plated layer 112 is formed by axially cutting the primary working substrate 11 from a small-diameter end to the large-diameter end according to the preset axial orthographic projection contour line. After cutting, the primary working substrate non-plated layers 112 are formed on a peripheral surface of the large-diameter end of the primary working substrate 11. Therefore, the primary working substrate plated layer 111 is located on a frustum lateral surface of the frustum, and the primary working substrate non-plated layers 112 are located on the peripheral surface outside the frustum lateral surface, as shown in FIG. 2.

A frustum-shaped bottom surface is similar to a polygon.

The present invention has the following beneficial effects. The plurality of primary working substrate non-plated layers are arranged on the peripheral surface of the frustum-shaped primary working substrate, so that during bead operation, only part of the diamond abrasive grains close to a large-diameter part (i.e., close to a frustum-shaped bottom surface of the substrate) at various points (i.e., at any central angle) in the circumferential direction of the substrate participate in grinding, and in the circumferential direction, the diamond abrasive grains corresponding to the plurality of convex sections of the contour line have a relatively greater probability of contacting (i.e., grinding) the workpiece than those corresponding to the plurality of concave sections of the contour line. Therefore, the contact area between the bead and the workpiece is greatly reduced. Compared with the prior art, under the same applied force, the working pressure of the diamond abrasive grains is higher, which in turn enhances the cutting capability and improves the sharpness. On this basis, by adaptively adjusting the concentration of the diamond abrasive grains on the primary working substrate plated layer corresponding to the convex sections and the concave sections on the contour line, it is conducive to achieving a shape-retaining function of the polygonal beads.

Preferably, as shown in FIGs. 1 to 8, azimuth angles of the primary working substrate non-plated layers 112 on the plurality of beads 1 are randomly staggered at various points in an axial direction. The primary working substrate plated layer 111 is provided with a plurality of primary working substrate working sections 113 and a plurality of primary working substrate non-working sections 114, which are alternately arranged in the circumferential direction of the frustum lateral surface. The primary working substrate working sections 113 and the primary working substrate non-working sections 114 are both of strip-shaped structures. The diamond abrasive grains are radially arranged on the primary working substrate working sections 113 in a single layer. The circumferential length of the primary working substrate working sections 113 corresponding to the convex sections that constitute the axial orthographic projection contour line of the primary working substrate 11 is greater than that of the primary working substrate working sections 113 corresponding to the concave sections.

It should be noted that in the technical solution of the present invention, the expression that "azimuth angles of the primary working substrate non-plated layers 112 on the plurality of beads 1 are randomly staggered at various points in an axial direction" means that in the direction of the steel wire rope 3, the primary working substrate non-plated layers 112 on one bead 1 and the primary working substrate non-plated layers 112 on the adjacent bead 1 are staggered in the circumferential direction of the frustum lateral surface, so that the primary working substrate non-plated layers 112 on the plurality of beads 1 may form a serration-like structure in the circumferential direction of the frustum lateral surface, which is a "macro-serration" in the technical solution of the present application.

Meanwhile, since the primary working substrate plated layer 111 is provided with the plurality of primary working substrate working sections 113 and the plurality of primary working substrate non-working sections 114, which are alternately arranged in the circumferential direction of the frustum lateral surface and the diamond abrasive grains are radially arranged on the primary working substrate working sections 113 in a single layer, in the circumferential direction of the primary working substrate plated layer 111, the diamond abrasive grains on the primary working substrate working sections 113 are raised, while no diamond abrasive grains present on the primary working substrate non-working sections 114. As a result, the primary working substrate non-working sections 114 are worn down to form micro-grooves, thereby forming "micro-serrations" in the technical solution of the present application.

Since the primary working substrate plated layer 111 is arranged on the peripheral surface of the primary working substrate 11, and the primary working substrate working sections 113 are arranged on the primary working substrate plated layer 111, in the technical solution of the present invention, the primary working substrate working sections 113 are not strip-shaped structures with constant widths from the small-diameter end to the large-diameter end of the primary working substrate 11, but rather strip-shaped structures having widths gradually increasing from the small-diameter end to the large-diameter end of the primary working substrate 11.

The above preferred solution has the following beneficial effects. The structural arrangement of the primary working substrate working sections and the primary working substrate non-working sections enables the diamond abrasive grains on the primary working substrate working sections to squeeze the workpiece corresponding to the adjacent primary working substrate non-working sections, so that mechanical crushing is achieved on a macro scale, thereby reducing the overall cutting load on the beads. The diamond abrasive grains that participate in work on the periphery of the primary working substrate form a "micro-serrated" structure in the circumferential direction of the frustum lateral surface to achieve micro-mechanical crushing of the workpiece, which is conducive to reducing the machining load, facilitates cooling and chip removal, reducing diamond cutting heat, and prolonging the service life of the beads. The primary working substrate non-working sections at the large-diameter end are prone to wear, forming grooves that create random gaps with the workpiece, these gaps provide better chip receiving/removal space and also function as water channels to achieve short-distance and smooth chip removal, thereby greatly reducing frictional heat and thus reducing heat loss of the diamond abrasive grains. In addition, the proportion of cooling water being ineffectively displaced and atomized is greatly reduced, so that the cooling water cools down the working diamond abrasive grains faster and achieves a higher effective cooling rate, which is conducive to prolonging the service life of the bead. By adaptively adjusting the circumferential lengths of the primary working substrate working sections and the primary working substrate non-working sections, the number of the diamond abrasive grains participating in work may be controlled, which is conducive to reducing the machining load and reducing the breakage rate of the wire saw. The primary working substrate forms an axial "macro-serrated" structure in a multi-frustum manner, which provides a large chip and water receiving space, achieves intermittent chip cutting mode, and is conducive to improving the sharpness. A single plated layer of the diamond abrasive grains is short in manufacturing cycle, simple in process and low in cost.

Preferably, as shown in FIG. 8, the lengths L of the primary working substrate working sections 113 in the circumferential direction of the frustum lateral surface are greater than or equal to 1 time the particle size b of the diamond abrasive grains, and less than 2 times the particle size b of the diamond abrasive grains, and the lengths δ of the primary working substrate non-working sections 114 in the circumferential direction of the frustum lateral surface are greater than or equal to 0.2 time the particle size b of the diamond abrasive grains, and less than 2 times the particle size b of the diamond abrasive grains.

The above preferred solution has the following beneficial effects: by setting different circumferential lengths for the various primary working substrate working sections, different supporting and protecting functions are formed among the diamond abrasive grains, which manifest as difference in wear resistance, thereby achieving uniform wear and in turn achieving the shape-retaining function.

Preferably, as shown in FIG. 2, when each bead 1 is formed by axially stacking the plurality of primary working substrates 11, the primary working substrate non-plated layers 112 on the plurality of primary working substrates 11 are arranged at the same azimuth angle.

It should be noted that the expression "arranged at the same azimuth angle" means that the positions of the plurality of the primary working substrate non-plated layers 112 in the circumferential direction of the primary working substrate 11 are the same when viewed in the axial direction.

The above preferred solution has the following beneficial effects: the primary working substrate non-plated layers on the plurality of primary working substrates of a single bead are at the same azimuth angle, which is conducive to increasing the mechanical crushing proportion of the workpiece and reducing the wear rate of the diamond abrasive grains by the workpiece.

Preferably, as shown in FIG. 2, the plurality of primary working substrate non-plated layers 112 are in one-to-one correspondence with the plurality of concave sections on the contour line, the concentration of the diamond abrasive grains arranged on the primary working substrate plated layer 111 corresponding to the convex sections is higher than the concentration of the diamond abrasive grains arranged on the primary working substrate plated layer 111 corresponding to the concave sections, the concentration of the diamond abrasive grains arranged on the primary working substrate plated layer 111 corresponding to the convex sections is 1.2 to 2 times the concentration of the diamond abrasive grains arranged on the primary working substrate plated layer 111 corresponding to the concave sections, and the concentration of the diamond abrasive grains gradually decreases or decreases in a stepwise manner from a most convex point on the primary working substrate plated layer 111 corresponding to the convex sections to a most concave point on the primary working substrate plated layer 111 corresponding to the concave sections adjacent to the convex sections in the circumferential direction of the primary working substrate plated layer 111.

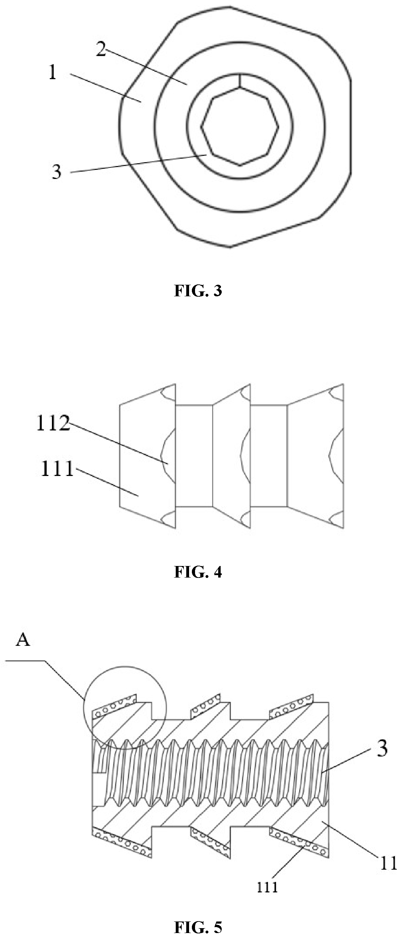

It should be noted that each primary working substrate non-plated layer 112 is formed by axially cutting the primary working substrate 11 from a small-diameter end to the large-diameter end according to the preset axial orthographic projection contour line, and after cutting, the primary working substrate non-plated layer 112 is formed on a peripheral surface of the large-diameter end of the primary working substrate 11. Since a recess is formed by cutting away part of the large-diameter end of the primary working substrate 11, the primary working substrate non-plated layers 112 correspond to the concave sections. As shown in FIGs. 3, 11 and 13, a circumscribed circle of each bead 1 is an orthographic projection of the large-diameter end of the primary working substrate 11 before the primary working substrate non-plated layers 112 are machined, so that the convex sections are part of the original circumscribed circle. The distance between the convex section and the center of the circle is the radius of the circumscribed circle. The concave sections are parts formed after cutting the original circumscribed circle. The distance between the concave section and the center of the circle is less than the radius of the circumscribed circle.

The above preferred solution has the following beneficial effects: by providing the concentration difference of the diamond abrasive grains on the convex sections and the concave sections, it is conducive to adjusting the wear resistance of each area, so that the convex sections with a higher concentration of the diamond abrasive grains have higher wear resistance, and the concave sections with a lower concentration of the diamond abrasive grains have lower wear resistance. The probability of contact between the convex sections and the workpiece is much higher than the probability of contact between the concave sections and the workpiece, so that the shape-retaining function of the beads of the wire saw can be achieved.

Preferably, as shown in FIGs. 3, 11 and 13, the closed structure formed by alternately arranging the plurality of convex sections and the plurality of concave sections that constitute the axial orthographic projection contour line of the primary working substrate 11 is a polygonal structure formed by sequentially connecting straight lines, a structure formed by alternately connecting straight lines and arcs, or a structure formed by sequentially connecting arcs.

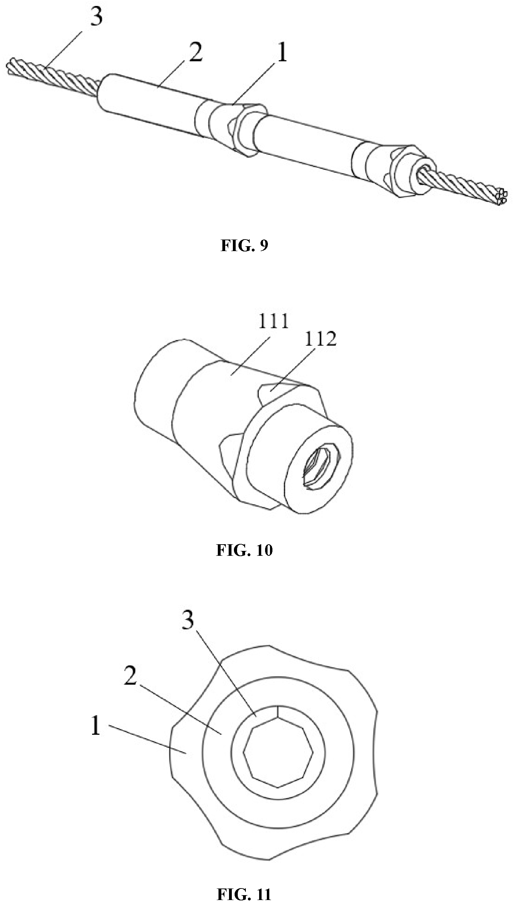

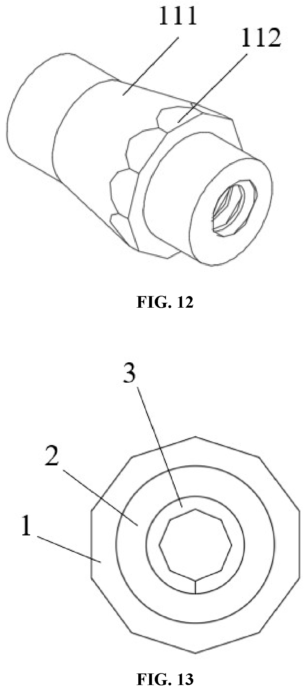

It should be noted that as shown in FIG. 13, in the case where the embodiment is a polygonal structure formed by sequentially connecting straight lines, the convex sections are vertices of the polygon, the most convex points are also the vertices of the polygon, the concave sections are sides of the polygon, and the most concave points are midpoints of sides of the polygon. As shown in FIG. 3, in the case where the embodiment is a structure formed by alternately connecting straight lines and arcs, the convex sections are convex arcs, the most convex points are midpoints of the convex arcs, the concave sections are straight lines, and the most concave points are midpoints of the straight lines. As shown in FIG. 11, in the case where the embodiment is a structure formed by sequentially connecting arcs, the convex sections are convex arcs, the most convex points are midpoints of the convex arcs, the concave sections are concave arcs, and the most concave points are midpoints of the concave arcs.

The above preferred solution has the beneficial effect that various embodiments are conducive to improving the applicability of the present invention.

Preferably, as shown in FIG. 6, the radial thickness H of the primary working substrate plated layer 111 is greater than or equal to 1 time the particle size b of the diamond abrasive grains and less than 1.5 times the particle size b of the diamond abrasive grains.

The above preferred solution has the following beneficial effects: it is advantageous to arrange the diamond abrasive grains in a single layer on the primary working substrate plated layers in the radial direction and the primary working substrate plated layers provide a higher holding force onto the diamond abrasive grains, which is conducive to prolonging the service life of the bead.

Preferably, as shown in FIGs. 5 to 7, in an axial direction of a peripheral inclined surface of the primary working substrate 11, for any two points spaced apart by a distance equal to the particle size of the diamond abrasive grains, the difference between the respective distances from said two points to the central axis of the primary working substrate 11 ranges from 10% to 40% of the particle size of the diamond abrasive grains.

It should be noted that from the perspective shown in FIG. 7, at a maximum-radius point of any central angle in the primary working substrate plated layer 111 on the inclined surface of the frustum-shaped primary working substrate 11, the number of the diamond abrasive grains participating in effective machining in the axial direction at this point is n, n falls within the range of 0 ≤ n ≤ 2, an optimized selection for high sharpness is 0 ≤ n ≤ 1, and an optimized selection for high wear resistance is 1 ≤ n ≤ 2.

As shown in FIG. 7, the layout requirements for the bead 1 during operation are as follows: the small-diameter end in the axial direction is a front end, i.e., the primary working substrate plated layer 111 faces forward, and the primary working substrate 11, which serves as backing for the diamond abrasive grains, is positioned at the rear. This arrangement is beneficial to bearing a higher cutting force or impact force, reducing the unnecessary detachment rate of the diamond abrasive grains and prolonging the service life of the bead 1.

The above preferred solution has the following beneficial effects: the high sharpness and wear resistance of the wire saw may be adjusted by providing different numbers of diamond abrasive grains participating in work (also the concept of different concentrations).

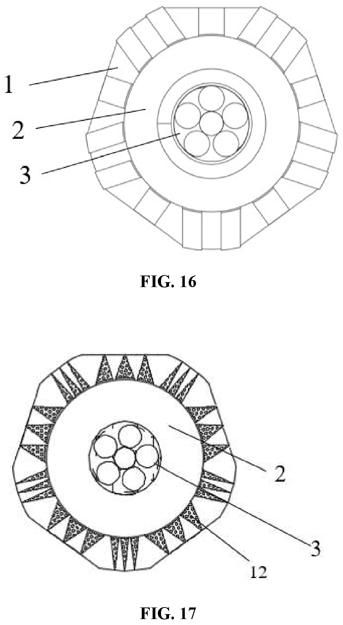

Preferably, as shown in FIGs. 14 to 19, each bead 1 further includes at least one service life-prolonging substrate 12. The primary working substrate 11 and the service life-prolonging substrate 12 are axially stacked, the life-prolong substrate 12 is of a frustum-shaped structure having an axial orthographic projection contour line similar to a polygon, and the axial orthographic projection contour line of the service life-prolonging substrate 12 is a closed structure formed by alternating a plurality of convex sections and a plurality of concave sections. A plurality of service life-prolonging substrate plated layers 121, a plurality of first service life-prolonging substrate non-plated layers 122 and a plurality of second service life-prolonging substrate non-plated layers 125 are arranged on a peripheral surface of the service life-prolonging substrate 12, diamond abrasive grains are arranged on the service life-prolonging substrate plated layers 121, and the first service life-prolonging non-plated layers 122 are arranged at a large-diameter end of the frustum-shaped service life-prolonging substrate 12. In one of the beads 1, the large-diameter end and a small-diameter end of the primary working substrate 11 have the same orientation as the large-diameter end and a small-diameter end of the service life-prolonging substrate 12, and the convex sections and the concave sections that constitute the axial orthographic projection contour line of the primary working substrate 11 are at the same azimuth angle as the convex sections and the concave sections that constitute the axial orthographic projection contour line of the service life-prolonging substrate 12.

It should be noted that in the technical solution of the present invention, in the case where only one primary working substrate 11 and only one service life-prolonging substrate 12 are provided, the primary working substrate 11 is arranged in front of the service life-prolonging substrate 12 in the machining direction of the wire saw; in the case where a plurality of primary working substrates 11 and a plurality of the service life-prolonging substrates 12 are provided, at least one of the service life-prolonging substrates 12 is arranged between every two adjacent primary working substrates 11; and in the case where one primary working substrate 11 and a plurality of service life-prolonging substrates 12 are provided, the primary working substrate 11 is arranged in front of the plurality of service life-prolonging substrates 12 in the machining direction of the wire saw.

In the case where the feeding speed of the wire saw and a tensioning force of the steel wire rope are fixed, as wear progresses, the diameter of the bead 1 is continuously reduced, a grinding working surface of the bead 1 and thus the grinding load may also be reduced, and the number of the diamond abrasive grains participating in the grinding work may also be reduced. It may be increasingly easier for the bead 1 to grind and cut the workpiece and only a part of the tensioning force is needed to drive the bead for grinding and machining, and the remaining tensioning force may be wasted. On this basis, by adding the service life-prolonging substrate 12, arranging the service life-prolonging substrate plated layers 121 on the peripheral surface of the service life-prolonging substrate 12, and utilizing the remaining tensioning force by the diamond abrasive grains on the service life-prolonging substrate plated layers 121, the number of the diamond abrasive grains participating in the grinding work may be increased. For grinding the same workpiece, the more diamond abrasive grains participate in the grinding work, the longer period of time the wire saw may be used for, i.e., the longer the service life of the wire saw is.

The above preferred solution has the following beneficial effects: the primary working substrate wears during operation, such that the number of the diamond particles participating in the grinding work on a grinding working surface of the primary working substrate is continuously reduced as the diameter is progressively reduced; by providing the service life-prolonging substrate, in the case where the feeding speed of the wire saw and a tensioning force of the steel wire rope are fixed, the remaining margin of the tensioning force is fully utilized; and the diamond abrasive grains arranged on the service life-prolonging substrate plated layers increase the number of the diamond abrasive grains in contact with the workpiece, thereby prolonging the service life of the wire saw, improving the cutting sharpness of the wire saw, increasing the proportion of mechanical crushing, and reducing the machining load.

Preferably, as shown in FIGs. 15 and 19, the life-increasing substrate plated layers 121 are of serrated structures, the plurality of the serrated structures have tooth roots arranged around the small-diameter end of the service life-prolonging substrate 12 and tooth tips arranged at circumferential midpoints of the convex sections or circumferential midpoints of the concave sections at the large-diameter end of the service life-prolonging substrate 12.

It should be noted that in the technical solution of the present invention, on the peripheral surface of the service life-prolonging substrate 12, the regions other than the plurality of serrated service life-prolonging substrate plated layers 121 are the service life-prolonging substrate non-plated layers. The service life-prolonging substrate non-plated layers include a plurality of first service life-prolonging substrate non-plated layers 122 and a plurality of second service life-prolonging substrate non-plated layers 125. The first service life-prolonging substrate non-plated layers 122 are arranged at the large-diameter end of the frustum-shaped service life-prolonging substrate 12. Therefore, parts of the service life-prolonging substrate non-plated layers other than the first service life-prolonging substrate non-plated layers 122 are the second service life-prolonging substrate non-plated layers 125, as shown in FIGs. 15 and 19.

The above preferred solution has the following beneficial effects. The structures of the service life-prolonging substrate plated layers are conducive to a gradual increase of the number of the diamond abrasive grains from the large-diameter end to the small-diameter end, which inversely corresponds to a gradual decrease of the number of the diamond abrasive grains from the large-diameter end to the small-diameter end on the primary working substrate plated layers. This is advantageous in that for the bead, as the diameter of the primary working substrate gradually decreases and the number of the diamond abrasive grains participating in work declines, a decrease in the diameter of the service life-prolonging substrate and a corresponding increase in the number of the diamond abrasive grains participating in work provide appropriate compensation. Consequently, the machining load is in a state where the safe tensioning force of the steel wire rope is fully utilized, which in turn can control the feeding speed to be in a relatively balanced state.

Preferably, as shown in FIGs. 15 and 19, each service life-prolonging substrate plated layer 121 is provided with a plurality of service life-prolonging substrate working sections 123 and a plurality of service life-prolonging substrate non-working sections 124, which are alternately arranged in a circumferential direction of a frustum lateral surface, the service life-prolonging substrate working sections 123 and the service life-prolonging substrate non-working sections 124 are both of strip-shaped structures, diamond abrasive grains are radially arranged on the service life-prolonging substrate working sections 123 in a single layer, and circumferential lengths of the service life-prolonging substrate working sections 123 corresponding to the convex sections that constitute the axial orthographic projection contour line of the service life-prolonging substrate 12 are greater than circumferential lengths of the service life-prolonging substrate working sections 123 corresponding to the concave sections.

The above preferred solution has the following beneficial effect: the primary working substrate may be assisted in achieving the shape-retaining function of the polygonal bead.

Preferably, as shown in FIGs. 15 and 19, the circumferential lengths of the service life-prolonging substrate working sections 123 are the same as the circumferential lengths of the primary working substrate working sections 113, the circumferential lengths of the service life-prolonging substrate non-working sections 124 are the same as the circumferential lengths of the primary working substrate non-working sections 114, and orientations of the service life-prolonging substrate working sections 123 and the service life-prolonging substrate non-working sections 124 on the service life-prolonging substrate plated layers 121 are the same as those of the primary working substrate working sections 113 and the primary working substrate non-working sections 114 on the primary working substrate plated layers 111.

The above preferred solution has the following beneficial effect: the primary working substrate may be assisted in achieving the shape-retaining function of the polygonal bead.

Preferably, the circumferential length of the service life-prolonging substrate working sections 123 are greater than or equal to 1 time the particle size of the diamond abrasive grains and less than 2 times the particle size of the diamond abrasive grains, and the circumferential lengths of the service life-prolonging substrate non-working sections 124 are greater than or equal to 0.2 time the particle size of the diamond abrasive grains and less than 2 times the particle size of the diamond abrasive grains.

The above preferred solution has the following beneficial effects: by setting the circumferential lengths of the working sections to be different, different supporting and protecting functions are formed among the diamond abrasive grains, which manifest as difference in wear resistance, thereby achieving uniform wear and in turn achieving the shape-retaining function.

Preferably, in the case where one of the beads 1 is provided with the plurality of primary working substrates 11 and the plurality of service life-prolonging substrates 12, the first service life-prolonging substrate non-plated layers 122 on the plurality of service life-prolonging substrates 12 are arranged at the same azimuth angle.

It should be noted that the expression "arranged at the same azimuth angle" means that the positions of the plurality of first service life-prolonging substrate non-plated layers 122 in the circumferential direction of the service life-prolonging substrate 12 are the same when viewed in the axial direction.

The above preferred solution has the following beneficial effect: it is conducive to increasing the mechanical crushing proportion of the workpiece and reducing the wear rate of the diamond abrasive grains by the workpiece.

Preferably, azimuth angles of the first service life-prolonging substrate non-plated layers 122 on the plurality of beads 1 are randomly staggered at various points in an axial direction.

It should be noted that the expression "randomly staggered" means that in the direction of the steel wire rope 3, the first service life-prolonging substrate non-plated layers 122 on one of the beads 1 and the first service life-prolonging substrate non-plated layers 122 on another adjacent bead 1 are circumferentially staggered on the frustum lateral surface, so that the first service life-prolonging substrate non-plated layers 122 on the plurality of beads 1 form a serration-like structure in the circumferential direction of the frustum lateral surface.

The above preferred solution has the following beneficial effect: it is conducive to increasing the mechanical crushing proportion of the workpiece and reducing the wear rate of the diamond abrasive grains by the workpiece.

Preferably, the closed structure formed by alternately arranging the plurality of convex sections and the plurality of concave sections that constitute the service life-prolonging substrate 12 is a polygonal structure formed by sequentially connecting straight lines, a structure formed by alternately connecting straight lines and arcs, or a structure formed by sequentially connecting arcs.

The above preferred solution has the beneficial effect that various embodiments are conducive to improving the applicability of the present invention.

Preferably, the radial thickness of each service life-prolonging substrate plated layer 121 is greater than or equal to 1 time the particle size of the diamond abrasive grains, and less than 1.5 times the particle size of the diamond abrasive grains.

The above preferred solution has the following beneficial effect: it is advantageous to arrange the diamond abrasive grains in a single layer on the service life-prolonging substrate plated layers in the radial direction, and the plated layers provide a higher holding force onto the diamond abrasive grains, which is conducive to prolonging the service life of the bead.

The present invention will be further described below by several embodiments.

### Embodiment 1

As shown in FIGs. 1 to 6, three primary working substrates 11 are axially arranged on one bead 1, and an axial orthographic projection contour line of each primary working substrate 11 is a structure formed by alternately connecting straight lines and arcs.

### Embodiment 2

As shown in FIGs. 9 to 11, only one primary working substrate 11 is arranged on one bead 1, and an axial orthographic projection contour line of the primary working substrate 11 is a structure formed by sequentially connecting convex arcs and concave arcs.

### Embodiment 3

As shown in FIGs. 12 and 13, only one primary working substrate 11 is arranged on one bead 1, and an axial orthographic projection contour line of the primary working substrate 11 is a regular polygonal structure formed by sequentially connecting straight lines.

### Embodiment 4

As shown in FIGs. 14 to 16, the bead 1 includes one service life-prolonging substrate 12 and two primary working substrates 11, and the service life-prolonging substrate 12 is arranged between the two primary working substrates 11.

### Embodiment 5

As shown in FIGs. 18 and 19, the bead 1 includes one service life-prolonging substrate 12 and one primary working substrate 11, and in a machining direction of the wire saw, the service life-prolonging substrate 12 is arranged behind the primary working substrate 11.

In the description of the present invention, it should be understood that the terms "center", "longitudinal", "transverse", "length", "width", "thickness", "upper", lower", "front", "rear", "left", "right", "vertical", "horizontal", "top", "bottom", " inner", "outer", "clockwise", "counterclockwise", "axial", "radial", "circumferential" and the like are based on the orientation or positional relationships shown in the drawings and are provided solely for the convenience of describing the present invention and simplifying the description; they do not indicate or imply that the devices or elements referred to must have a specific orientation, be constructed in a specific orientation, or operate in a specific orientation. Therefore, they should not be construed as limitations on the present invention.

Furthermore, the terms "first" and "second" are used solely for descriptive purposes and should not be construed as indicating or implying relative importance or as implicitly specifying the number of technical features indicated. Accordingly, features designated as "first" or "second" may explicitly or implicitly include at least one such feature. In the description of the present invention, "multiple" means at least two, such as two, three, and so on, unless otherwise explicitly and specifically defined.

In the present invention, unless otherwise explicitly specified or limited, the terms such as "mounted", "connected", "coupled" and "fixed" should be interpreted broadly; for example, they may refer to a fixed connection, a detachable connection, or an integral structure; they may refer to a mechanical connection or an electrical connection; they may be direct connections or indirect connections via an intermediate medium; they may involve internal communication between two components or an interactive relationship between two components, unless otherwise explicitly specified. A person skilled in the art can understand the specific meanings of the above terms in the context of the present invention based on the specific circumstances.

In the present invention, unless otherwise explicitly specified or limited, the first feature being "on" or "under" the second feature may mean that the first and second features are in direct contact, or that they are in indirect contact via an intermediate medium. Furthermore, the first feature being "on top of", "above", or "on" the second feature may mean that the first feature is directly above or diagonally above the second feature, or may simply indicate that the first feature is at a higher horizontal level than the second feature. The terms "below", "under", and "on the underside of" the second feature with respect to the first feature may mean that the first feature is directly below or diagonally below the second feature, or may simply indicate that the first feature is at a lower horizontal elevation than the second feature.

In the descriptions contained in this specification, the reference terms such as "an embodiment", "some embodiments", "example", "specific example", or "some examples" indicate that the specific features, structures, materials, or characteristics described in connection with that embodiment or example are included in at least one embodiment or example of the invention. In this specification, the illustrative use of the above terms is not necessarily limited to the same embodiment or example. Furthermore, the specific features, structures, materials, or characteristics described may be combined in an appropriate manner in any one or more embodiments or examples. Additionally, provided there is no contradiction, those skilled in the art may combine and integrate the different embodiments or examples described in this specification, as well as the features of different embodiments or examples.

Although embodiments of the present invention have been illustrated and described above, it should be understood that the aforementioned embodiments are exemplary and are not to be construed as limiting the present invention; those skilled in the art may make changes, modifications, substitutions, and variations to the aforementioned embodiments within the scope of the present invention.

## Claims

1. An electroplated polygonal beaded wire saw, **characterized by** comprising a plurality of beads (1), a plurality of spacers (2) and a steel wire rope (3), wherein the plurality of beads (1) and the plurality of spacers (2) are alternately and coaxially sleeved on the steel wire rope (3); and
each bead (1) is formed by axially stacking at least one primary working substrate (11), the primary working substrate (11) is of a frustum-shaped structure having an axial orthographic projection contour line similar to a polygon, the axial orthographic projection contour line of the primary working substrate (11) is a closed structure formed by alternating a plurality of convex sections and a plurality of concave sections, a primary working substrate plated layer (111) and a plurality of primary working substrate non-plated layers (112) are arranged on a peripheral surface of the primary working substrate (11), diamond abrasive grains are arranged on the primary working substrate plated layer (111), and the primary working substrate non-plated layers (112) are arranged at a large-diameter end of the frustum-shaped primary working substrate (11).

2. The electroplated polygonal beaded wire saw according to claim 1, **characterized in that** azimuth angles of the primary working substrate non-plated layers (112) on the plurality of beads (1) are randomly staggered at various points in an axial direction; and
the primary working substrate plated layer (111) is provided with a plurality of primary working substrate working sections (113) and a plurality of primary working substrate non-working sections (114), which are alternately arranged in a circumferential direction of a frustum lateral surface, the primary working substrate working sections (113) and the primary working substrate non-working sections (114) are of strip-shaped structures, the diamond abrasive grains are radially arranged on the primary working substrate working sections (113) in a single layer, and circumferential lengths of the primary working substrate working sections (113) corresponding to the convex sections that constitute the axial orthographic projection contour line of the primary working substrate (11) are greater than circumferential lengths of the primary working substrate working sections (113) corresponding to the concave sections.

3. The electroplated polygonal beaded wire saw according to claim 2, **characterized in that** the lengths of the primary working substrate working sections (113) in the circumferential direction of the frustum lateral surface are greater than or equal to 1 time a particle size of the diamond abrasive grains, and less than 2 times the particle size of the diamond abrasive grains, and the lengths of the primary working substrate non-working sections (114) in the circumferential direction of the frustum lateral surface are greater than or equal to 0.2 time the particle size of the diamond abrasive grains, and less than 2 times the particle size of the diamond abrasive grains.

4. The electroplated polygonal beaded wire saw according to claim 1, **characterized in that** when each bead (1) is formed by axially stacking the plurality of primary working substrates (11), the primary working substrate non-plated layers (112) on the plurality of primary working substrates (11) are arranged at the same azimuth angle.

5. The electroplated polygonal beaded wire saw according to claim 1, **characterized in that** the plurality of primary working substrate non-plated layers (112) are in one-to-one correspondence with the plurality of concave sections on the contour line, a concentration of the diamond abrasive grains arranged on the primary working substrate plated layer (111) corresponding to the convex sections is higher than a concentration of the diamond abrasive grains arranged on the primary working substrate plated layer (111) corresponding to the concave sections, the concentration of the diamond abrasive grains arranged on the primary working substrate plated layer (111) corresponding to the convex sections is 1.2 to 2 times the concentration of the diamond abrasive grains arranged on the primary working substrate plated layer (111) corresponding to the concave sections, and in the circumferential direction of the primary working substrate plated layer (111), the concentration of the diamond abrasive grains gradually decreases or decreases in a stepwise manner from a most convex point on the primary working substrate plated layer (111) corresponding to the convex sections to a most concave point on the primary working substrate plated layer (111) corresponding to the concave sections adjacent to the convex sections.

6. The electroplated polygonal beaded wire saw according to claim 1, **characterized in that** the closed structure formed by alternately arranging the plurality of convex sections and the plurality of concave section that constitute the axial orthographic projection contour line of the primary working substrate (11) is a polygonal structure formed by sequentially connecting straight lines, a structure formed by alternately connecting straight lines and arcs, or a structure formed by sequentially connecting arcs.

7. The electroplated polygonal beaded wire saw according to claim 1, **characterized in that** a radial thickness of the primary working substrate plated layer (111) is greater than or equal to 1 time a particle size of the diamond abrasive grains and less than 1.5 times the particle size of the diamond abrasive grains.

8. The electroplated polygonal beaded wire saw according to claim 1, **characterized in that** in an axial direction of a peripheral inclined surface of the primary working substrate (11), for any two points spaced apart by a distance equal to a particle size of the diamond abrasive grains, a difference between respective distances from said two points to a central axis of the primary working substrate (11) ranges from 10% to 40% of the particle size of the diamond abrasive grains.

9. The electroplated polygonal beaded wire saw according to claim 2, **characterized in that** each bead (1) further comprises at least one service life-prolonging substrate (12), the primary working substrate (11) and the service life-prolonging substrate (12) are axially stacked, the life-prolong substrate (12) is of a frustum-shaped structure having an axial orthographic projection contour line similar to a polygon, the axial orthographic projection contour line of the service life-prolonging substrate (12) is a closed structure formed by alternating a plurality of convex sections and a plurality of concave sections, a plurality of service life-prolonging substrate plated layers (121), a plurality of first service life-prolonging substrate non-plated layers (122) and a plurality of second service life-prolonging substrate non-plated layers (125) are arranged on a peripheral surface of the service life-prolonging substrate (12), diamond abrasive grains are arranged on the service life-prolonging substrate plated layers (121), and the first service life-prolonging substrate non-plated layers (122) are arranged at a large-diameter end of the frustum-shaped service life-prolonging substrate (12); and
in one of the beads (1), the large-diameter end and a small-diameter end of the primary working substrate (11) have the same orientation as the large-diameter end and a small-diameter end of the service life-prolonging substrate (12), and the convex sections and the concave sections that constitute the axial orthographic projection contour line of the primary working substrate (11) are at the same azimuth angle as the convex sections and the concave sections that constitute the axial orthographic projection contour line of the service life-prolonging substrate (12).

10. The electroplated polygonal beaded wire saw according to claim 9, **characterized in that** the service life-prolonging substrate plated layers (121) are of serrated structures, the plurality of serrated structures have tooth roots arranged around the small-diameter end of the service life-prolonging substrate (12) and tooth tips arranged at circumferential midpoints of the convex sections or of the concave sections at the large-diameter end of the service life-prolonging substrate (12).

11. The electroplated polygonal beaded wire saw according to claim 9, **characterized in that** each service life-prolonging substrate plated layer (121) is provided with a plurality of service life-prolonging substrate working sections (123) and a plurality of service life-prolonging substrate non-working sections (124), which are alternately arranged in a circumferential direction of a frustum lateral surface, the service life-prolonging substrate working sections (123) and the service life-prolonging substrate non-working sections (124) are both of strip-shaped structures, diamond abrasive grains are radially arranged on the service life-prolonging substrate working sections (123) in a single layer, and circumferential lengths of the service life-prolonging substrate working sections (123) corresponding to the convex sections that constitute the axial orthographic projection contour line of the service life-prolonging substrate (12) are greater than circumferential lengths of the service life-prolonging substrate working sections (123) corresponding to the concave sections.

12. The electroplated polygonal beaded wire saw according to claim 11, **characterized in that** the circumferential lengths of the service life-prolonging substrate working sections (123) are the same as the circumferential lengths of the primary working substrate working sections (113), the circumferential lengths of the service life-prolonging substrate non-working sections (124) are the same as the circumferential lengths of the primary working substrate non-working sections (114), and orientations of the service life-prolonging substrate working sections (123) and the service life-prolonging substrate non-working sections (124) on the service life-prolonging substrate plated layers (121) are the same as orientations of the primary working substrate working sections (113) and the primary working substrate non-working sections (114) on the primary working substrate plated layers (111).

13. The electroplated polygonal beaded wire saw according to claim 11, **characterized in that** the circumferential lengths of the service life-prolonging substrate working sections (123) are greater than or equal to 1 time the particle size of the diamond abrasive grains and less than 2 times the particle size of the diamond abrasive grains, and the circumferential lengths of the service life-prolonging substrate non-working sections (124) are greater than or equal to 0.2 time the particle size of the diamond abrasive grains and less than 2 times the particle size of the diamond abrasive grains.

14. The electroplated polygonal beaded wire saw according to claim 9, **characterized in that** when one of the beads (1) is provided with the plurality of primary working substrates (11) and the plurality of service life-prolonging substrates (12), the first service life-prolonging substrate non-plated layers (122) on the plurality of service life-prolonging substrates (12) are arranged at the same azimuth angle.

15. The electroplated polygonal beaded wire saw according to claim 9, **characterized in that** azimuth angles of the first service life-prolonging substrate non-plated layers (122) on the plurality of beads (1) are randomly staggered at various points in an axial direction.

16. The electroplated polygonal beaded wire saw according to claim 9, **characterized in that** the closed structure formed by alternately arranging the plurality of convex sections and the plurality of concave sections that constitute the service life-prolonging substrate (12) is a polygonal structure formed by sequentially connecting straight lines, a structure formed by alternately connecting straight lines and arcs, or a structure formed by sequentially connecting arcs.

17. The electroplated polygonal beaded wire saw according to claim 9, **characterized in that** a radial thickness of each service life-prolonging substrate plated layer (121) is greater than or equal to 1 time the particle size of the diamond abrasive grains, and less than 1.5 times the particle size of the diamond abrasive grains.
